# EUROPÄISCHE PATENTSCHRIFT

(11) **EP 0 341 615 B1**
(45) Veröffentlichungstag und Bekanntmachung des Hinweises auf die Patenterteilung: **10.03.1993**
(21) Anmeldenummer: 89108191.1
(22) Anmeldetag: 05.05.1989
(51) Int. Cl.: C12C 1/04

(54) **Verfahren und Vorrichtung zum Darren von Malz**
Process and plant for kilning malt
Procédé et installation de touraillage du malt

(30) Priorität: 09.05.1988 DE 3815845
(43) Veröffentlichungstag der Anmeldung: 15.11.1989
(73) Patentinhaber: Air Fröhlich AG für Energierückgewinnung, CH-9320 Arbon (CH)
(72) Erfinder: Frei, Willi, CH-9016 St. Gallen (CH)
(74) Vertreter: Füchsle, Klaus, Dipl.-Ing.

(56) Entgegenhaltungen:
- EP-A- 0 097 965
- EP-A- 0 107 925
- FR-A- 2 284 845
- DIE BIERBRAUEREI, Band 1, 6. Auflage, 1976, Ferdinand Enke Verlag, Stuttgart, DE; SCHUSTER et al. "Die Technologie der Malzbereitung" Seiten 277-291, 307-312

## Beschreibung

### 1. Technologischer Hintergrund

Die Erfindung bezieht sich auf ein Verfahren zum Darren von Malz in einer Hordenanordnung, bei dem mindestens zwei Zonen zum Schwelken und eine Zone zum Abdarren bzw. Kühlen des Malzes vorgesehen sind und die ungesättigte Abluft aus der Abdarr- bzw. Kühlzone als Rückluft dem Zuluftsystem beigemischt wird, sowie auf eine Vorrichtung zur Durchführung dieses Verfahrens mit einer Hordenanordnung, einer Be- und Entladeeinrichtung für das Malz und einer Schwelkluft- und einer Abdarrluft-Versorgung.

Für den Vorgang des Trocknens, des sogenannten Darrens, von Malz, welches für die Bierherstellung verwendet wird, ist es von außerordentlicher Bedeutung, nicht nur eine gezielte Trocknung des Grünmalzes zu erreichen, sondern zusätzlich durch eine definierte Temperatursteuerung der Trocknungsluft bestimmte Malzeigenschaften zu beeinflussen, die beim späteren Brauprozeß die Qualität und den Geschmack des Endproduktes mitbestimmen. Neben diesen technologischen Anforderungen sind auch die wirtschaftlichen Parameter zu berücksichtigen, damit der Darrprozeß sowohl vom Energieverbrauch als auch vom Bedienungsaufwand her möglichst rationell abläuft; zudem müssen Voraussetzungen geschaffen werden, um energiesparende Komponenten optimal in die entsprechenden Anlagen integrieren zu können.

Diese Aufgabe wird heute je nach der individuellen Beurteilung der wirtschaftlichen und technologischen Randbedingungen von den einzelnen Malz-Betrieben mit unterschiedlichen Darrsystemen gelöst. Am meisten verbreitet sind Einhorden- und Zweihorden-Darren, die seit Jahrzehnten im Einsatz stehen, stets verbessert wurden und dadurch einen hohen Entwicklungsstand erreicht haben. Neben diesen, vom Trocknungsgut her gesehen, rein statischen Anlagen sind in den Jahren hoher Energiepreise auch dynamische Systeme mit kontinuierlicher Malzförderung entwickelt worden. Diese drei Darrentypen bedürfen keiner weiteren Erläuterung, da sie in der Fachliteratur, z.B. "Die Technologie der Malzbereitung" der Autoren Schuster/Weinfurtner/Narziss sowie in Patentschriften, z.B. DE-A- 32 24 471.1-09 im Detail beschrieben.

In einem Überblick können die Eigenschaften dieser Darranlagen wie folgt zusammengefaßt werden:

### 2. Einhorden-Darre

Einhorden-Darren werden seit ca. 40 Jahren gebaut. Diese einfach aufgebauten Darren weisen weltweit gesehen die größte Verbreitung auf. Einerseits günstig in bezug auf Investition und Bedienung, sind für sie andererseits relativ hohe spezifische Wärmeverbrauchswerte von ca. 3 800 MJ/t Fertigmalz (FM) ohne Wärmerückgewinnung (WRG) oder 2 500 MJ/t FM mit WRG zu veranschlagen.

### 3. Zweihorden-Darre

Zweihorden-Darren sind schon seit etwa der Jahrhundertwende bekannt. Damals waren sie noch mit großem Bedienungsaufwand verbunden. Später wurden sie, mit Ausnahme auf dem nordamerikanischen Kontinent, mehr und mehr durch die Einhorden-Darren ersetzt. Infolge der günstigeren Heizenergieverwertung erlebte dieser Darrentyp vermehrte Wiederverwendung in Zeiten steigender Energiepreise. Obschon durch den Einsatz von zwei Horden mit separater Be- und Entladeeinrichtung sowie aufwendigem Darrluftverbund relativ teuer in der Investition, ist diese Anordnung zur Zeit bei Neubauten am meisten vertreten.

Die Zweihorden-Darre wird üblicherweise im 24-Stunden-Rhythmus betrieben, d.h.: jeden Tag zu etwa derselben Zeit wird die gesamte zu darrende Grünmalzmenge auf eine Horde geladen, während auf der anderen Horde das vorgetrocknete (geschwelkte) Malz vom Vortag zum Fertigtrocknen (Abdarren) bereitliegt. Damit wird eine Charge im 2 x 24 = 48-Stundenzyklus gedarrt. Dies setzt voraus, daß jede Horde eine volle Grünmalzmenge aufnehmen kann.

Eine von den Investitionen her günstigere Variante besteht darin, die Zweihorden-Darre im 12-Stunden-Rhythmus zu beladen; d.h., am Morgen wird die Hälfte der Grünmalzmenge auf eine Horde, 12 Stunden später die andere Hälfte auf die andere Horde geladen. Dadurch müssen zwar noch immer zwei Horden installiert werden, aber die Gesamtfläche beider Horden ist ebenso groß wie die Fläche der Einhorden-Darre. Nachteilig wirkt sich der damit notwendige 2-Schichtbetrieb mit 10 - 12-stündigem Schichtabstand aus.

Diese Nachteile bezüglich höherer Investition oder erhöhtem Bedienungsaufwand werden durch günstigere Wärmeverbrauchswerte kompensiert. Ohne Wärmerückgewinnung ist mit einem spezifischen Verbrauch von ca. 3 000 MJ/t FM, mit Wärmerückgewinnung von ca. 2 100 MJ/t FM zu rechnen.

Infolge der praktisch gleichbleibenden Abluftzustände bei mehr oder weniger durchgehender Betriebsweise eignet sich die Zweihorden-Darre zudem für die Ausrüstung mit Energiesparkomponenten, wie Wärmepumpe und/oder Blockheizkraftwerke.

### 4. Kontinuierliche Darren

Kontinuierliche Darren wurden ebenfalls im Hinblick auf optimale Energienutzung entwickelt und arbeiten nach dem Grundsatz, aus einem belüfteten Zwischenbehälter kontinuierlich Grünmalz der Darrenanlage zuzuführen und in kleinen Chargen in kurzer Zeit zu trocknen. Durch den kontinuierlichen Betrieb und die geringen, sich im eigentlichen Darrprozeß befindlichen Malzmengen sind ideale Voraussetzungen für moderne Energiekonzepte vorhanden.

Kontinuierlich arbeitende Darren sind als Demonstrationsanlagen in Betrieb und sind noch in bezug auf die Beherrschung der Betriebszustände mit kontinuierlich arbeitender Malfördermechanik zu optimieren. Diese Anlagen bauen im Vergleich zu einer Zweihorden-Darre bedeutend kompakter; im Energieverbrauch bewegen sich beide etwa im gleichen Rahmen, vor allem wenn bei der Zweihorden-Darre auf das zeit- und energieraubende Umladen des geschwelkten Malzes verzichtet wird.

### 5. Lufttechnische Grundlagen zum Darrenprozeß

Die unterschiedlichen Verbrauchswerte beim Trocknen von Malz rühren daher, daß der Trocknungsvorgang aus technologischen Gründen in zwei Phasen aufgeteilt wird, die sich im wesentlichen durch verschiedene Zulufttemperaturen unterscheiden. Grünmalz für Brauzwecke kommt mit einem Wassergehalt von 40 - 50% auf die Darre und soll in der ersten Phase, dem sogenannten Schwelken, unter schonenden Verhältnissen bei Temperaturen um 60°C auf einen Wassergehalt von 12% getrocknet werden. In dieser Phase bleibt die Kornoberfläche des Malzes feucht, so daß die Darrluft praktisch wasserdampfgesättigt das Malzbett verläßt. Dieser Abschnitt kann je nach Darrentyp 10 bis 24 Stunden dauern und zeichnet sich durch eine optimale Nutzung des Trocknungspotentiales der Darrluft aus.

In der zweiten Phase, dem sogenannten Abdarren, soll ein Wassergehalt im Fertigmalz von unter 5% erreicht werden, wobei während der letzten Stunden, wiederum aus technologischen Gründen, die Darrluft zwischen 80 bis 90°C, in manchen Fällen bis 110°C, liegen soll.

Die dabei gegebene ungenügende Ausnutzung des Trocknungspotentials wird durch einen markanten Temperaturanstieg der verbrauchten Darrluft angezeigt. Liegt nämlich die Ablufttemperatur am Ende der Schwelkzeit noch bei ca. 28°C, so steigt sie bis zum Ende der Abdarrphase auf Werte zwischen 70 und 80°C.

Zum Zeitpunkt der Einführung der Einhorden-Darre hat man den mit dem Betrieb der Abdarrphase verbundenen Energieverlust in Kauf genommen, da der Energiefaktor bei der Malzherstellung damals nur eine untergeordnete Rolle spielte. Allerdings ist man schon bald dazu übergegangen, in diese Einhorden-Darren Umluftkanäle mit Klappen zu installieren, um bei fortschreitender Abdarrzeit einen Teil der Abluft wieder dem Zuluftstrom beizumischen. Der verbleibende Abluftstrom verließ die Darre nach wie vor mit hohen Temperaturen; auch der Einsatz von Wärmetauscheranlagen konnte den Verlust nie vollkommen wettmachen, wobei die freiwerdende Energie beim Abkühlen der Malzcharge auf Umgebungstemperatur in jedem Fall verlorenging.

Mit steigenden Heizenergiepreisen erinnerte man sich wieder an die Zweihorden-Darre, bei der die beiden Darrphasen nicht nacheinander wie bei der Einhorden-Darre, sondern gleichzeitig ablaufen. Im wärmetechnischen Idealfall überdeckt die Schwelkzeit die energetisch ungünstige Abdarr- und Kühlzeit, so daß die Abluft aus der Abdarrhorde vollumfänglich als Umluft auf die Zuluftseite zurückgeführt werden kann. Dadurch fällt nur praktisch mit Wasserdampf gesättigte Abluft aus der Schwelkhorde an, die zudem gute Bedingungen für den Einsatz verschiedenster Wärmerückgewinnungssysteme aufweist.

### 6. Offenbarung der Erfindung

Der Erfindung liegt die Aufgabe zugrunde, ein Verfahren und eine Vorrichtung zur Durchführung dieses Verfahrens vorzuschlagen, bei denen die einfache Anordnung einer Einhorden-Darre mit dem energetisch optimalen Betrieb der Zweihorden-Darre kombiniert sind.

Diese Aufgabe wird erfindungsgemäß dadurch gelöst, daß verfahrensmäßig in den Schwelkzonen durch den Grad ihrer Beladung mit Malz, die Ausbildung der Hordenfläche und/oder durch Einstellung des Volumenstroms, der Temperatur bzw. des Feuchtigkeitsgehalts der Zuluft jeweils unterschiedliche Schwelkzeiten derart erreicht werden, daß während des Abdarrens in der Abdarrzone stets ein Schwelkvorgang in mindestens einer Schwelkzone stattfinden kann und jede einzelne Zone lufttechnisch getrennt von den anderen betrieben wird. Bei der erfindungsgemäßen Vorrichtung zur Durchführung dieses Verfahrens ist die Hordenfläche eine Einhorden-Darre durch Trennwände in mindestens drei Zonen aufgeteilt und die Luftversorgung so ausgebildet ist, daß die Abluft zonenweise unvermischt abgeführt wird; des weiteren sind die Trennwände derart ausgebildet, daß jede Zone eine Be- und Entladeeinrichtung aufweist oder sich in den Bereich der Be- und Entladeeinrichtung bewegen kann.

Der Betrieb dieser sogenannten Kombinationsdarre besteht nun darin, die täglich anfallende Grünmalzmenge innerhalb einer normalen Arbeitsschicht auf die freien Zonen aufzuteilen und durch geeignete Maßnahmen bei Beladung, Hordenflächenaufteilung und Darrluftversorgung eine für jede Zone unterschiedlich lange Schwelkzeit zu bewirken. Aus technologischen Gründen soll die kürzeste Zonenschwelkzeit mindestens 8 Stunden, die längste maximal 24 Stunden betragen.

Die Zonen sind mit Trennwänden versehen, die je nach Hordenform feststehend oder aber teilweise mit dem Hordenboden zusammen beweglich angeordnet sind, so daß jede einzelne Zone lufttechnisch getrennt von den anderen betrieben und die Abluft über ein Luftklappensystem zonenweise unvermischt abgeführt werden kann. So entsteht weiter die Möglichkeit, daß ungesättigte Abluft aus der Abdarr- bzw. Kühlzone als Rückluft dem Zuluftsystem beigemischt werden oder aber als feuchte, gesättigte Abluft aus der/den Schwelkluftzone/n unvermischt in einer Wärmerückgewinnungsanlage abgeführt werden kann. Bei der bevorzugten Anwendung einer Wärmerückgewinnungsanlage bringt dies den Vorteil, daß hierdurch der Energieverbrauch günstiger gehalten werden kann.

Bei Verwendung einer ortsfesten Einhorden-Darre ist es bei dem erfindungsgemäßen Verfahren besonders von Vorteil, daß die Horde in drei voneinander getrennte Zonen aufgeteilt ist, nämlich in eine Abdarr- und zwei Schwelkzonen. In der ersten Zone liegt eine fertig geschwelkte Grünmalz-Teilmenge vom Vortag und in dieser wird bereits der Abdarrvorgang eingeleitet. Die zwei anderen Zonen werden mit unterschiedlichen Mengen von Grünmalz beladen und in diesen wird dann der Schwelkvorgang betrieben. Bei dieser Verfahrensweise ist es bevorzugt, daß die Schwelkzeit der einen Zone nach 16 Stunden und der anderen Zone nach 24 Stunden beendet ist, und daß das Grünmalz danach innerhalb von 8 bis 16 Stunden in der gleichen Zone abgedarrt und gekühlt wird. Dabei verbleibt eine Grünmalzmenge immer in der gleichen Zone; die Versorgung zuerst mit Schwelkluft, danach mit Abdarrluft erfolgt durch automatische Temperatursteuerung über ein Luftklappensystem. Dadurch wird erreicht, daß sich mindestens eine Zone während des ganzen 24-Stunden-Zyklus in der Schwelkphase befindet.

Bei einer Einhorden-Darre dauert die Schwelkzeit normalerweise 12 Stunden, damit genügend Zeit für Abdarren, Kühlen, Be- sowie Entladen übrigbleibt. Bei der Kombinations-Darre dauert die akkumulierte Schwelkzeit, bezogen auf die gesamte Grünmalzmenge, 24 Stunden, d.h., die durchschnittliche Schwelkluftmenge ist nur 50% so groß wie bei der Einhorden-Darre. Durch das exponentielle Verhalten des Stromverbrauchs mit reduziertem Luftdurchsatz kann die effektive Hordenfläche für das Schwelken bei einer Kombinations-Darre bedeutend kleiner gewählt werden. Dadurch wird auch unter Berücksichtigung der zusätzlichen Abdarrhordenfläche für die Charge vom Vortag die gesamte Hordenfläche im Rahmen einer Einhorden-Darre liegen. Wärmetauscher, Beheizung und Fördervolumen der Darrventilatoren können allerdings erheblich kleiner ausgelegt werden, so daß sich der Investitionsaufwand ähnlich der Einhorden-Darre, der Energieverbrauch sich jedoch im Rahmen einer optimal ausgelegten Zweihorden-Darre bewegt.

Bei einer weiteren erfindungsgemäßen Verfahrensvariante wird eine kreisförmige Einhorden-Darre eingesetzt; sie weist eine fest installierte Luftversorgung auf und die Horde ist drehbar ausgebildet. Die Hordenfläche ist in drei voneinander getrennte Zonen, nämlich eine Be- , Entlade- und Vorschwelkzone, eine Schwelkzone und eine Abdarr- und Kühlzone, aufgeteilt. Die jeweilige Zone ist durch Drehen der Horde an die entsprechende Luftversorgung anschließbar. Dadurch ergibt sich ein einfacher Aufbau der Anordnung mit einem Minimum an beweglichen Teilen. Im Gegensatz zur Ausführung mit einer Festhorde werden bei der Drehhorde die einzelnen Grünmalzmengen durch eine 120°-Drehung der Horde von einer Behandlungszone zur anderen bewegt, so daß die Abluftumschaltung mit Klappen wegfällt, die Luftaufbereitung nur entweder für das Schwelken oder für das Abdarren/Kühlen auszulegen ist und nur noch eine Belade-/Entladeeinrichtung notwendig wird. Das erfindungsgemäße Verfahren mit Drehhorde ist detailliert dem Anspruch 8 zu entnehmen.

Zweckmäßige Ausbildungen von Vorrichtungen zur Durchführung des erfindungsgemäßen Verfahrens sind in den Ansprüchen 9 bis 16 beschrieben.

### 7. Beschreibung von Ausführungsbeispielen der Erfindung

Die Erfindung wird nachstehend anhand der in den beigefügten Zeichnungen dargestellten Ausführungsbeispiele näher erläutert.

Es zeigt:
- Fig. 1: in schematischer Darstellung einen vertikalen Schnitt durch eine erste Ausführungsform der erfindungsgemäßen, mit Festhorden versehenen Vorrichtung und
- Fig. 2: in schematischer Darstellung einen horizontalen Schnitt durch eine zweite Ausführungsform der erfindungsgemäßen, mit Drehhorden versehenen Vorrichtung.

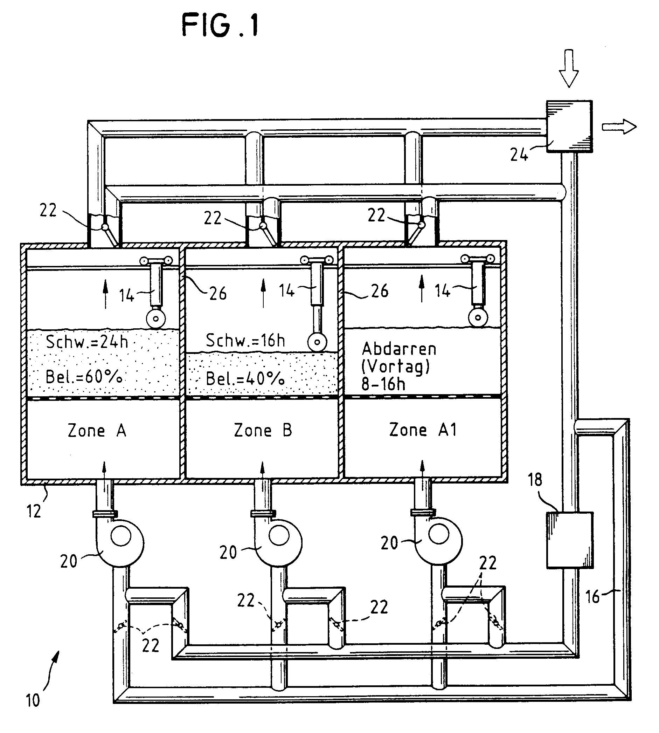

In Fig. 1 ist beispielsweise eine Dreizonen-Kombinations-Darre dargestellt, nämlich die Variante mit Festhorden. Die Darranlage 10 besteht aus einer dreiteiligen Darrhorde 12 mit einer in jeder Zone A, B und A1 angeordneten Be- und Entladeeinrichtung 14 sowie einer Darrluftversorgung mit Temperatursteuerung. Die drei Zonen A, B und A1 der Fläche der Darrhorde 12 sind durch Trennwände 26 ausgebildet. Ein Luftklappensystem 22 ist im Zuluft- und Abluftsystem der Darranlage 10 angeordnet, bei dem durch automatische Temperatursteuerung über die Luftklappen die Luftversorgung zu den jeweiligen Zonen erfolgt. Die Erzeugung bzw. Förderung der Schwelkluft bzw. Abdarrluft erfolgt durch Mischen von Luft aus einem Bypass-Kanal 16 mit Heißluft vom Abdarrlufterhitzer 18 über die im Zuluftsystem angeordneten Ventilatoren 20. Zur Senkung des Energieverlustes ist im Abluftsystem der Darranlage 10 eine Wärmerückgewinnungsanlage 24 angeordnet.

Am Beispiel der in Fig. 1 gezeigten Kombinationsdarre mit Festhorden kann der Betrieb für die Drei-Zonen-Aufteilung beschrieben werden. Zwei (A und B) der drei Zonen (A, B und A1) werden mit Grünmalz beladen; in der Zone A1 liegt eine fertig geschwelkte Grünmalzteilmenge vom Vortag, die sich bereits am Beginn der Abdarrphase befindet. Die Beladung beginnt mit Zone B (ca. 40%) und der Rest wird dann auf Zone A verteilt; diese beiden Zonen werden dann mit Schwelkluft versorgt. Die Dimensionierung der Darranlage 10 und die Beladehöhe sind so ausgelegt, daß die Schwelkzeit in Zone B nach ca. 16 und in Zone A nach ca. 24 Stunden beendet ist. Jede Zone wird danach innerhalb 8 bis 16 Stunden abgedarrt und gekühlt. Dabei verbleibt eine Grünmalzmenge immer in der gleichen Zone. So befindet sich eine Zone während des ganzen 24- Stunden-Zyklus in der Schwelkphase, wobei Abluft aus dieser Zone in der Wärmerückgewinnungsanlage und Abluft aus der sich in der Abdarr- oder Kühlphase befindlichen Zone im Zuluftsystem verwertet wird.

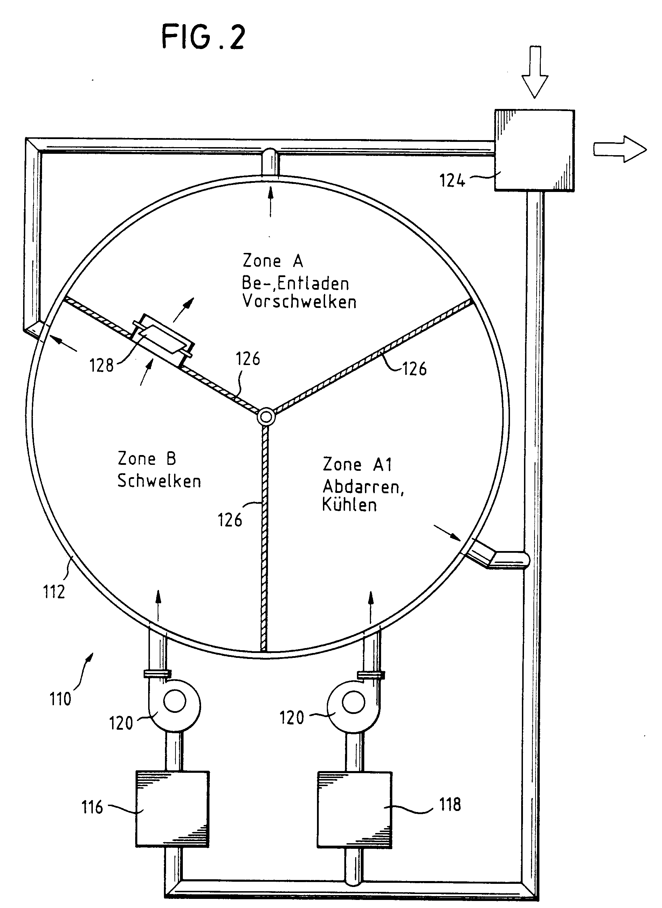

Die in Fig. 2 gezeigte Dreizonen-Kombinations-Darre stellt die Variante mit einer Drehhorde 112 dar. Diese Darranlage 110 weist wie die in Fig. 1 dargestellte Kombinations-Darre eine in drei Zonen A, B und A1 mit Trennwänden 126 aufgeteilte Hordenfläche auf. Sie umfaßt eine der Be-, Entlade- und Vorschwelkzone A zugeordnete Be- und Entladeeinrichtung, eine Darrluftversorgung mit Temperatursteuerung und eine Abdarrluftversorgung. Die Luftversorgung ist fest installiert und die Förderung der Schwelk- und Abdarrluft erfolgt von den Schwelk- und Abdarrlufterhitzern 116, 118 über die im Zuluftsystem angeordneten Ventilatoren 120. Eine Wärmerückgewinnungsanlage 124 ist im Abluftsystem der Luftversorgung angeordnet. Zwischen der Be-, Entlade- und Vorschwelkzone A und der Schwelkzone B ist eine luftdicht verschließbare Luftklappe 128 unter der Drehhorde 112 angeordnet. Diese Luftklappe 128 hat keine Regelfunktion, sondern nur eine Auf-Zu-Funktion und dient dazu, bei geöffneter Position die Zone A mit Schwelkluft zu versorgen. Die Drehhorde 112 ist so in der Darranlage 110 angeordnet, daß sie für den automatischen Zonenwechsel geeignet ist.

Ein möglicher, praxisnaher Betrieb der Drehhorde mit den drei Zonen A, B und A1 und Drehhorde stellt sich folgendermaßen dar:
Bei Arbeitsbeginn am Morgen befindet sich in der Schwelkzone B eine ca. 60%-Charge vom Vortag am Ende der Schwelkphase und in der Abdarr- und Kühlzone A1 wird die ca. 40%-Charge vom Vortag bereits gekühlt. Noch während die Schwelkzone B und die Abdarr- und Kühlzone A1 in Betrieb stehen, wird die leere Be-, Entlade- und Vorschwelkzone A mit ca. 40% des neu anfallenden Grünmalzes beladen. Die Luftklappe 128 unter der Drehhorde 112 zwischen Zone A und B ist geschlossen. Nach Beendigung des Beladevorgangs in Zone A und Abschluß des Kühlvorgangs in Zone A1 dreht sich die Drehhorde 112 um 120°. So kommt die abgekühlte Charge in der Be-, Entlade- und Vorschwelkzone A zu liegen und die neue 40%-Charge in der Schwelkzone B. Während des Drehvorgangs der Drehhorde 112 bleibt der Schwelkventilator 120 in Betrieb, während der Abdarrventilator 120 nach dem Kühlen abgestellt wurde.

In der Abdarr- und Kühlzone A1 befindet sich nun die 60%-Charge vom Vortag und der Abdarrventilator 120 und der Abdarrlufterhitzer 118 gehen in Betrieb. In der Zone A wird die Fertigmalzcharge ausgeräumt und gleich anschließend die restlichen ca. 60% des neuen Grünmalzes geladen. Die Luftklappe 128 zwischen Zone A und B wird geöffnet und aufgrund der unterschiedlichen Beladungen strömen durch die Zone A ca. 45% und durch die Zone B ca. 55% der vom Ventilator 120 geförderten Schwelkluftmenge. Nach ca. 14 Stunden ist der Abdarr- und Kühlvorgang in Zone A1 beendet und etwa zur gleichen Zeit ist der Schwelkbetrieb in Zone B abgeschlossen. Die Luftklappe 128 zwischen Zone A und B wird geschlossen und die Drehhorde 112 wird wieder um 120° gedreht.

In der Schwelkzone B liegt nun die 60%-Charge zum weiteren Schwelken, allerdings bei einer höheren Schwelkluftmenge, da nur noch diese Zone B mit Luft versorgt wird. In der Abdarr- und Kühlzone A1 ist die 40%-Charge in der Abdarrphase und in der Be-, Entlade- und Vorschwelkzone A wird die 60%-Charge vom Vortag ausgeräumt. Bis zum Wiederbeginn des Zyklus am anderen Morgen bleibt dann die Zone A leer. Der Zyklus beginnt wieder am folgenden Morgen, wenn die Abdarr- und Kühlzone A1 fertig gedarrt und am Kühlen ist, mit der Beladung von Zone A.

## Patentansprüche

1. Verfahren zum Darren von Malz in einer Hordenanordnung, bei dem
a) mindestens zwei Zonen zum Schwelken und eine Zone zum Abdarren bzw. Kühlen des Malzes vorgesehen sind und
b) die ungesättigte Abluft aus der Abdarr- bzw. Kühlzone als Rückluft dem Zuluftsystem beigemischt wird,
dadurch **gekennzeichnet**, daß
c) in den Schwelkzonen durch den Grad ihrer Beladung mit Malz, durch die Ausbildung der Hordenfläche und/oder durch Einstellung des Volumenstroms, der Temperatur bzw. des Feuchtigkeitsgehalts der Zuluft jeweils unterschiedliche Schwelkzeiten derart erreicht werden, daß während des Abdarrens in der Abdarrzone stets ein Schwelkvorgang in mindestens einer Schwelkzone stattfinden kann und
d) die Schwelkzonen und die Abdarr- und Kühlzone lufttechnisch getrennt voneinander betrieben werden.

2. Verfahren nach Anspruch 1, dadurch gekennzeichnet, daß
- die kürzeste Zonenschwelkzeit mindestens 8 Stunden, die längste maximal 24 Stunden beträgt.

3. Verfahren nach Anspruch 1, dadurch gekennzeichnet, daß
- die feuchte, gesättigte Abluft aus der/den Schwelkzone/n unvermischt in einer Wärmerückgewinnungsanlage abgeführt wird.

4. Verfahren nach Anspruch 1, dadurch gekennzeichnet, daß
- bei Verwendung einer ortsfesten Einhorden-Darre diese in drei voneinander getrennte Zonen aufgeteilt ist, wobei sich eine im Abdarr- und eine oder zwei im Schwelkbetrieb befinden.

5. Verfahren nach Anspruch 4, dadurch gekennzeichnet, daß
a) in der ersten Zone eine fertig geschwelkte Grünmalz-Teilmenge vom Vortag liegt und in dieser bereits der Abdarrvorgang eingeleitet wird, und
b) die zweite und die dritte Zone mit unterschiedlichen Mengen von Grünmalz beladen werden und in diesen der Schwelkvorgang betrieben wird.

6. Verfahren nach Anspruch 5, dadurch gekennzeichnet, daß
a) die Schwelkzeit der zweiten Zone nach 16 Stunden und der dritten Zone nach 24 Stunden beendet ist, und
b) das Grünmalz danach innerhalb von 8 - 16 Stunden in der jeweils gleichen Zone abgedarrt und gekühlt wird.

7. Verfahren nach Anspruch 1, dadurch gekennzeichnet, daß
a) bei Verwendung einer kreisförmigen Einhorden-Darre, die eine fest installierte Luftversorgung aufweist, diese drehbar ausgebildet ist,
b) die Hordenfläche in drei voneinander getrennte Zonen, nämlich eine Be- , Entlade- und Vorschwelkzone, eine Schwelkzone und eine Abdarr- und Kühlzone, aufgeteilt ist, und
c) die jeweilige Zone durch Drehen der Horde an die entsprechende Luftversorgung anschließbar ist.

8. Verfahren nach Anspruch 7, dadurch gekennzeichnet, daß
a) während sich in der Schwelkzone eine Grünmalz-Charge vom Vortag am Ende der Schwelkphase und in der Abdarr- und Kühlzone eine andere Charge vom Vortag in der Abdarr- und Kühlphase befinden, die Be- , Entlade- und Vorschwelkzone mit einer Charge des neu anfallenden Grünmalzes beladen wird,
b) nach Beendigung des Beladevorgangs in der Be-, Entlade- und Vorschwelkzone und nach Abschluß des Kühlvorganges in der Abdarr- und Kühlzone die Horde um 120° gedreht wird, so daß die abgekühlte Charge in die Be-, Entlade- und Vorschwelkzone, die geschwelkte Charge in die Abdarr- und Kühlzone und die neue Charge in die Schwelkzone bewegt werden, wobei während des Drehens der Horde die Schwelkluftzufuhr in Betrieb bleibt und die Abdarrluftzufuhr nach dem Kühlen abgestellt wird,
c) nach dem Stillstand der Horde die Abdarrluftzufuhr wieder in Betrieb gesetzt wird und in der Be-, Entlade- und Vorschwelkzone die Fertigmalzcharge ausgeräumt und danach diese Zone mit der zweiten Charge bzw. dem Rest des neu angefallenen Grünmalzes beladen wird,
d) der Schwelkzone und der Be-, Entlade- und Vorschwelkzone durch die unterschiedlichen Beladungen der beiden Zonen eine ungleich große Schwelkluftmenge zugeführt wird,
e) nach dem ungefähr gleichzeitigen Beenden des Abdarr- und Kühlvorganges in der Abdarr- und Kühlzone und der Schwelkvorgang in der Schwelkzone die Horde wieder um 120° gedreht wird, wobei lufttechnisch die Schwelkluftversorgung zur Be-, Entlade- und Vorschwelkzone abgeschlossen ist,
f) wodurch die sich in der Abdarr- bzw. Kühlzone befindliche erste Neu-Charge der Abdarrphase unterworfen wird, während in der Be-, Entlade- und Vorschwelkzone die vom Vortag herrührende Charge ausgeräumt wird, und die sich in der Schwelkzone befindliche zweite Neu-Charge mit einer höheren Schwelkmenge dem Schwelkvorgang ausgesetzt wird, während die geleerte Be-, Entlade- und Vorschwelkzone bis zum nächsten Darrzyklusanfang leer bleibt.

9. Vorrichtung zur Durchführung des Verfahrens nach Anspruch 1, mit
a) einer Hordenanordnung,
b) einer Be- und Entladeeinrichtung (14) für das Malz und
c) einer Schwelkluft- (16; 116) und einer Abdarrluft-Versorgung (18; 118),
dadurch gekennzeichnet, daß
d) die Hordenfläche einer Einhorden-Darre (12; 112) durch Trennwände (26; 126) in mindestens drei Zonen aufgeteilt ist,
e) die Luftversorgung so ausgebildet ist, daß die Schwelkluft und die Darrluft unvermischt zu- und abgeführt werden, und
f) die Trennwände (26; 126) derart angeordnet sind, daß jede Zone eine Be- und Entladeeinrichtung (14) aufweist oder sich in den Bereich der Be- und Entladeeinrichtung (14) bewegen kann.

10. Vorrichtung nach Anspruch 9, dadurch gekennzeichnet, daß
- eine Wärmerückgewinnungsanlage (24; 124) im Abluftsystem der Luftversorgung vorgesehen ist.

11. Vorrichtung nach Anspruch 9, dadurch gekennzeichnet, daß
- die Luftversorgung an der Zufuhr- und Abfuhrseite mit einem Luftklappensystem (22) versehen ist.

12. Vorrichtung nach Anspruch 11, dadurch gekennzeichnet, daß
- das Luftklappensystem (22) so ausgebildet ist, daß die Zonen einzeln oder in verschiedenen Kombinationen mit Schwelk- oder Abdarrluft versorgt werden.

13. Vorrichtung nach Anspruch 12, dadurch gekennzeichnet, daß
- das Luftklappensystem (22) automatisch betätigt wird.

14. Vorrichtung nach Anspruch 9, dadurch gekennzeichnet, daß
a) die Hordenanordnung als ortsfeste Horde (12) ausgebildet ist und in drei voneinander getrennte Zonen (A; B; A1) unterteilt ist und
b) jeder Zone (A; B; A1) eine eigene Zuluft- und Abluftanlage zugeordnet ist.

15. Vorrichtung nach Anspruch 9, dadurch gekennzeichnet, daß
a) die Hordenanordnung als Drehhorde (112) ausgebildet ist,
b) die Hordenfläche in drei voneinander getrennte Zonen (A; B; A1) aufgeteilt ist, die sowohl als Be-, Entlade- und Vorschwelkzone (A), Schwelkzone (B) und Abdarr- und Kühlzone (A1) benutzbar sind, und
c) ortsfeste Luftzufuhr- und Abfuhr-Anordnungen vorgesehen sind, an die die Zonen (A; B; A1) durch Drehen der Horde (112) wahlweise anschließbar sind.

16. Vorrichtung nach Anspruch 15, dadurch gekennzeichnet, daß
- zwischen der Be-, Entlade- und Vorschwelkzone (A) und der Schwelkzone (B) eine luftdicht verschließbare Luftklappe (128) vorgesehen ist.

## Claims

1. A process for the kiln-drying of malt in a floor arrangement, in which
a) there are provided at least two zones for withering and one zone for drying and/or cooling the malt, and
b) the unsaturated exhaust air from the drying and/or cooling zone is admixed as return air with the air intake system,
wherein
c) in the withering zones, respectively different withering times are achieved by the degree of charging with malt, by the arrangement of the floor areas and/or by adjustment of the volume flow, the temperature and/or the moisture content of the intake air in such a manner that a withering process can always take place in at least one withering zone during the drying in the drying zone, and
d) the withering zones and the drying and cooling zone are operated separately from one another with respect to air ventilation.

2. Process according to claim 1, characterized in that
- the shortest withering zone time is at least 8 hours, and the longest maximally 24 hours.

3. Process according to claim 1, wherein
- the moist, saturated exhaust air from the withering zone or zones is lead unmixed into a heat recovery installation.

4. Process according to claim 1, wherein
- when using a fixed single floor kiln-drier, this is subdivided into three separate zones, one of which is in the drying operation and one or two of which are in the withering operation.

5. Process according to claim 4, wherein
a) a completely withered partial quantity of green malt from the previous day is present in the first zone and the drying process is already initiated in this first zone, and
b) the second and third zones are charged with different quantities of green malt and the withering process is operated in these zones.

6. Process according to claim 5, wherein
a) the withering time in the second zone is ended after 16 hours and in the third zone after 24 hours, and
b) the green malt is then dried and cooled within 8 to 16 hours in the respectively same zone.

7. Process according to claim 1, wherein
a) when using a circular single floor kiln-drier which has a fixed air supply, this is rotatable,
b) the floor area is divided into three separate zones, namely a charging, discharging and pre-withering zone, a withering zone and a drying and cooling zone, and
c) the respective zone can be connected to the corresponding air supply by rotating the floor.

8. Process according to claim 7, wherein
a) while a green malt charge from the previous day is at the end of the withering phase in the withering zone and another charge from the previous day is in the drying and cooling phase in the drying and cooling zone, the charging, discharging and pre-withering zone is charged with a charge of the newly incoming malt,
b) after completion of the charging process in the charging, discharging and pre-withering zone and after completion of the cooling process in the drying and cooling zone, the floor is rotated about 120° so that the cooled charge is moved into the charging, discharging and pre-withering zone, the withered charge is moved into the drying and cooling zone and the new charge is moved into the withering zone, wherein during the rotation of the floor, the withering air supply remains in operation and the drying air supply is switched off after cooling,
c) after the stopping of the floor, the drying air supply is reactivated and the completed malt charge in the charging, discharging and pre-withering zone is removed and this zone is then charged with the second charge or the remainder of the newly incoming green malt,
d) an unequally large quantity of withering air is supplied to the withering zone and the charging, discharging and pre-withering zone due to the different charges of both zones,
e) after the approximately simultaneous ending of the drying and cooling process in the drying and cooling zone and of the withering process in the withering zone, the floor is again rotated about 120°, wherein the withering air supply to the charging, discharging and pre-withering zone is shut off,
f) whereby the first new charge in the drying and cooling zone is subjected to the drying phase, while in the charging, discharging and pre-withering zone, the charge from the previous day is removed, and the second new charge in the withering zone is subjected to the withering process with a greater quantity of withering air, while the emptied charging, discharging and pre-withering zone remains empty until the next start of the kiln-drying cycle.

9. An apparatus for the implementation of the process according to claim 1, comprising,
a) a floor arrangement,
b) a charging and discharging device (14) for the malt, and
c) a withering air supply (16; 116) and a drying air supply (18, 118),
wherein
d) the floor area of a single floor kiln-drier (12; 112) is subdivided by partition walls (26; 126) into at least three zones,
e) the air supply is arranged such that the withering air and the drying air is supplied and exhausted unmixed, and
f) the partition walls (26; 126) are arranged in such a manner that each zone has a charging and discharging device (14) or can move into the area of the charging and discharging device (14).

10. Apparatus according to claim 9, wherein
- a heat removal installation (24; 124) is provided in the exhaust air system of the air supply.

11. Apparatus according to claim 9, wherein
- the air supply on the intake and exhaust side is provided with an air valve system (22).

12. Apparatus according to claim 11, wherein
- the air valve system (22) is arranged such that the zones are supplied individually or in various combinations with withering or drying air.

13. Apparatus according to claim 12, wherein
- the air supply system (22) is automatically activated.

14. Apparatus according to claim 9, wherein
a) the floor arrangement is formed as a fixed floor (12) and subdivided into three separate zones (A; B; A1), and
b) each zone (A; B; A1) is associated with its own air intake and exhaust installation.

15. Apparatus according to claim 9, wherein
a) the floor arrangement is formed as a rotating floor (112)
b) the floor area is subdivided into three separate zones (A; B; A1) which can be used as a charging, discharging and pre-withering zone (A), a withering zone (B) and a drying and cooling zone (A1), and
c) fixed air intake and exhaust arrangements are provided to which the zones (A; B; A1) can be optionally connected by rotation of the floor (112).

16. Apparatus according to claim 15, wherein an air-tightly sealable air valve (128) is provided between the charging, discharging and pre-withering zone (A) and the withering zone (B).

## Revendications

1. Procédé de touraillage du malt, dans une installation de type à plateau, dans lequel
a) sont prévues au moins deux zones, pour opérer le séchage à l'air, et une zone, pour opérer le coup de feu, respectivement le refroidissement du malt, et
b) l'air d'échappement non saturé provenant de la zone de coup de feu, respectivement de refroidissement du malt est adjoint par mélange au système d'amenée d'air, à titre d'air de recirculation,
caractérisé en ce que
c) dans les zones de séchage à l'air, du fait de leur degré. de chargement en malt, grâce à la configuration de la surface des plateaux et/ou par réglage du débit volume, de la température respectivement du degré d'humidité de l'air d'amenée, sont obtenus chaque fois des temps de séchage à l'air différents, de telle façon que, pendant le coup de feu opéré dans la zone de coup de feu, puisse toujours avoir lieu un processus de séchage dans au moins une zone de séchage à l'air et
d) la zone de séchage à l'air et la zone de coup de feu et de refroidissement fonctionnant avec une séparation, les unes par rapport aux autres, des conditions techniques de l'air.

2. Procédé selon la revendication 1, caractérisé en ce que
- la plus courte durée de séchage à l'air dans une zone est au moins de 8 heures, la plus longue durée de séchage à l'air dans une zone est au moins de 24 heures.

3. Procédé selon la revendication 1, caractérisé en ce que
- l'air d'échappement humide, saturé, sortant de la ou des zones de séchage à l'air est évacué, sans subir de mélange, dans une installation de récupération de chaleur.

4. Procédé selon la revendication 1, caractérise en ce qu'
- en cas d'utilisation d'une touraille à un plateau fixe, celui-ci est subdivisé en trois zones séparées les unes des autres, le fonctionnement étant tel qu'une zone se trouve en coup de feu et une ou deux zones en séchage à l'air.

5. Procédé selon la revendication 4, caractérisé en ce que
a) dans la première zone se trouve une quantité partielle de malt vert fini de sécher, de la veille, et le processus de coup de feu étant déjà commencé dans cette zone, et
b) la deuxième et la troisième zone étant chargées avec des quantités de malt vert différentes et le processus de séchage à l'air étant effectué dans ces zones.

6. Procédé selon la revendication 5, caractérisé en ce que
a) le temps de séchage à l'air de la deuxième zone est achevé au bout de 16 heures et celui de la troisième zone est achevé au bout de 24 heures, et
b) dans les 8 à 16 heures qui suivent, le malt vert est ensuite soumis au coup de feu et refroidi, chaque fois dans la même zone.

7. Procédé selon la revendication 1, caractérisé en ce que
a) dans le cas d'utilisation d'une touraille à un plateau circulaire, présentant une alimentation en air dont l'installation est fixe, le plateau est susceptible de tourner,
b) la surface de plateau est subdivisée en trois zones séparées les unes des autres, à savoir une zone de chargement, de déchargement et de préséchage à l'air, une zone de séchage à l'air et une zone de coup de feu et de refroidissement, et
c) chaque zone spécifique est susceptible d'être raccordée à l'alimentation en air correspondante par une rotation du plateau.

8. Procédé selon la revendication 7, caractérisé en ce que
a) pendant que se trouve dans la zone de séchage à l'air une charge de malt vert, datant de la veille et se trouvant à la fin de la phase de séchage à l'air et que se trouve dans la zone de coup de feu et de refroidissement une autre charge, de la veille, dans la phase de coup de feu et de refroidissement, la zone de chargement, de déchargement et de préséchage à l'air est chargée avec une charge de nouveau malt vert en arrivage,
b) après achèvement du processus de chargement dans la zone de chargement, de déchargement et de préséchage à l'air et après achèvement du processus de refroidissement dans la zone de coup de feu et de refroidissement, le plateau est tourné de 120 degrés, de telle façon que la charge refroidie est déplacée dans la zone de chargement, de déchargement et de préséchage à l'air, la charge séchée à l'air est déplacée dans la zone de coup de feu et de refroidissement et la nouvelle charge est déplacée dans la zone de séchage à l'air' où pendant la rotation du plateau, l'amenée d'air de séchage reste en fonctionnement et l'amenée d'air de coup de feu est mise hors service après séchage;
c) après l'arrêt du plateau, l'amenée d'air de coup de feu est de nouveau remis en service et l'évacuation de la charge de malt dont le traitement est terminé est opérée dans la zone de chargement, de déchargement et de préséchage à l'air, cette zone étant ensuite chargée avec la deuxième charge, respectivement le reste du malt vert nouvellement arrivé,
d) une quantité d'air de séchage différente est amenée à la zone de séchage à l'air et à la zone de chargement, de déchargement et de préséchage, et passée à travers les charges différentes des deux zones,
e) après l'achèvement à peu prés simultané du processus de coup de feu et de refroidissement, dans la zone de coup de feu et de refroidissement, et le processus de séchage à l'air étant effectué dans la zone de séchage, le plateau est de nouveau tourné de 120 degrés, l'alimentation en air de séchage à la zone de chargement et de déchargement et de préséchage étant achevée,
f) faisant que la nouvelle charge se trouvant dans la zone de coup de feu respectivement de refroidissement est soumise à la phase de coup de feu, pendant que dans la zone de chargement, de déchargement et de préséchage à l'air est évacuée la charge venant de la veille, et la deuxième nouvelle charge, se trouvant dans la zone de séchage à l'air, est exposée, avec une quantité à sécher à l'air plus élevée, au processus de séchage à l'air, pendant que la zone de chargement, de déchargement et de préséchage ayant été vidée, reste vide jusqu'au démarrage suivant de cycle de coup de touraillage.

9. Dispositif pour mettre en oeuvre le procédé selon la revendication 1, avec
a) un dispositif à plateau,
b) un dispositif de chargement et de déchargement (14), pour le malt et
c) une alimentation en air de séchage (16;116) et en air de coup de feu (18;118),
caractérisé en ce que
d) la surface de plateau d'une touraille à un plateau (12;112) est subdivisée en au moins trois zones, au moyen de parois de séparation (26;126),
e) l'alimentation en air est réalisée de telle façon que l'air de séchage et l'air de coup de feu sont amenés et évacués sans qu'il y ait mélange et
f) les parois de séparation (26;126) sont réalisées de telle façon que chaque zone présente un dispositif de chargement et de déchargement (14) ou peut se déplacer dans la zone du dispositif de chargement et de déchargement (14).

10. Dispositif selon la revendication 9, caractérisé en ce qu'
- il est prévu une installation de récupération de chaleur (24; 124) dans le système d'échappement d'air de l'alimentation en air.

11. Dispositif selon la revendication 9, caractérisé en ce que
- l'alimentation en air au côté amenée et échappement est pourvue d'un système à clapet d'air (22).

12. Dispositif selon la revendication 11, caractérisé en ce que
- le système à clapet d'air (22) est réalisé de telle façon que les zones sont alimentées en air de séchage ou de coup de feu, individuellement ou en différentes combinaisons.

13. Dispositif selon la revendication 12, caractérisé en ce que
- le système à clapet d'air (22) est actionné automatiquement.

14. Dispositif selon la revendication 9, caractérisé en ce que
a) le dispositif à plateau est réalisé sous forme de plateau fixe (12) et subdivisé en trois zones (A;B;A1) séparées les unes des autres et
b) une installation propre d'amenée d'air et d'échappement d'air est associée à chaque zone (A;B;A1).

15. Dispositif selon la revendication 9, caractérisé en ce que
a) le dispositif à plateau est réalisé sous forme de plateau tournant (112)
b) la surface de plateau est subdivisée en trois zones (A;B;A1) séparées les unes des autres, utilisables tant à titre de zone de chargement, déchargement et préséchage (A), zone de séchage à l'air (B) et zone de coup de feu et refroidissement (A1), et
c) des dispositifs d'amenée d'air et d'échappement d'air étant prévus, auxquels les zones (A;B;A1) sont susceptibles d'être raccordées au choix, par rotation du plateau (112).

16. Dispositif selon la revendication 15, caractérisé en ce qu'
- un clapet d'air obturable (128), étanche à l'air est prévu entre la zone de chargement, de déchargement et de préséchage à l'air (A) et la zone de séchage à l'air (B).
